# EUROPEAN PATENT APPLICATION

(11) **EP 2 093 120 A1**
(43) Date of publication of application: **26.08.2009**
(21) Application number: 07792804.2
(22) Date of filing: 21.08.2007
(51) Int. Cl.: B60W 10/08, B60K 6/48, B60K 6/547, B60L 11/14, B60W 10/06, B60W 10/10, B60W 20/00

(54) **DRIVE SOURCE CONTROL DEVICE FOR VEHICLE**

(30) Priority: 30.08.2006 JP 2006233106
(71) Applicant: Aisin Seiki Kabushiki Kaisha, Kariya-shi, Aichi 448-8650 (JP)
(72) Inventor: OKAWA, Akemi, Kariya-shi Aichi 448-8650 (JP); SUZUKI, Yoshihide, Kariya-shi Aichi 448-8605 (JP)
(74) Representative: Kramer - Barske - Schmidtchen
(86) International application number: PCT/JP2007/066205
(87) International publication number: WO 2008/026480

(57) **Abstract**

An object of the present invention is to provide a driving source control apparatus for hybrid vehicle capable of lowering an amount of fuel consumption and an amount of exhaust gas without deteriorating necessary acceleration performance. The driving source control apparatus includes means for calculating additional torque to be outputted from the motor according to accelerator opening and vehicle speed by assuming that there is no additional torque from the engine when an acceleration request is made by an accelerator operation, and means for setting shortage as an additional torque from the engine when the calculated additional torque from the motor causes a shortage of torque. Further, the apparatus restrains shift transmission and calculates additional torque corresponding to kickdown shift transmission by using a transmission gear ratio when the acceleration request fulfills predetermined kickdown requirements.

## Description

### TECHNICAL FIELD

(Related Application) This application claims priority on prior Japanese Patent Application No. 2006-233106 (filed on August 30, 2006), the disclosure of which is incorporated herein by reference thereto.
The present invention relates to a driving source control apparatus for vehicle, and in particular, to a driving source control apparatus for vehicle equipped with an engine and a motor as driving sources.

### BACKGROUND ART

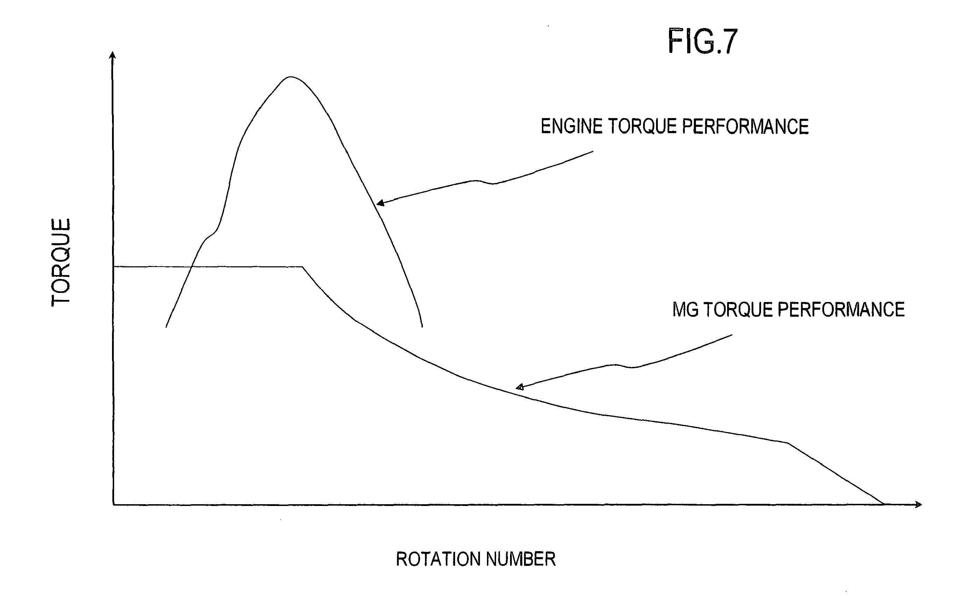

FIG. 7 is a graph showing torque performance of an engine and a motor generator (hereinafter also called "motor" or "MG"), and the engine has a peak within certain rotational region capable of generating high torque. However, there are [problems of] exhaust gas and fuel consumption. On the other hand, although there is the advantage that the motor is capable of generating high torque from a low rotational region, the torque decreases in high rotation regions.

In a so-called parallel system hybrid vehicle, there has been known a technology in which a torque assist by a motor is executed at startup or during acceleration by utilizing a difference between the characteristics of the driving sources, in order to reduce engine sound and improve its fuel consumption while running.

For example, Patent Document 1 discloses a torque assist by a motor for a given period of time from the startup in order to prevent deterioration in fuel consumption due to excess depression of an accelerator pedal by a driver at startup from an idling stop state during "eco-running" (fuel economic and environmentally-friendly running).

Further, Patent Document 2 discloses a technology in which, in order to prevent engine sound or vibration from rapidly changing due to a battery being disconnected during acceleration using a torque assist, electric power supplied from the battery and an electric power supply time are estimated in advance, and the battery and the engine output during an accelerating period are controlled based on the estimated result.

Patent Document 1:
Japanese Patent Kokai Publication No. 2005-325804A Patent Document 2:
   Japanese Patent Kaokai Publication No. 2006-9588A

### DISCLOSURE OF THE INVENTION

The disclosures of the Patent Documents 1 and 2 are incorporated herein by reference herein thereto.
As described above, there has been proposed to execute a torque assist by a motor at startup or during acceleration. However, the proposal is premised on additional torque from an engine being obtained, and has a problem that commensurate fuel consumption and exhaust gas discharge are brought about. In particular, when a so-called kickdown operation is carried out, shift transmission to a low-speed position (stage) is performed, which makes the above-described tendency pronounced.

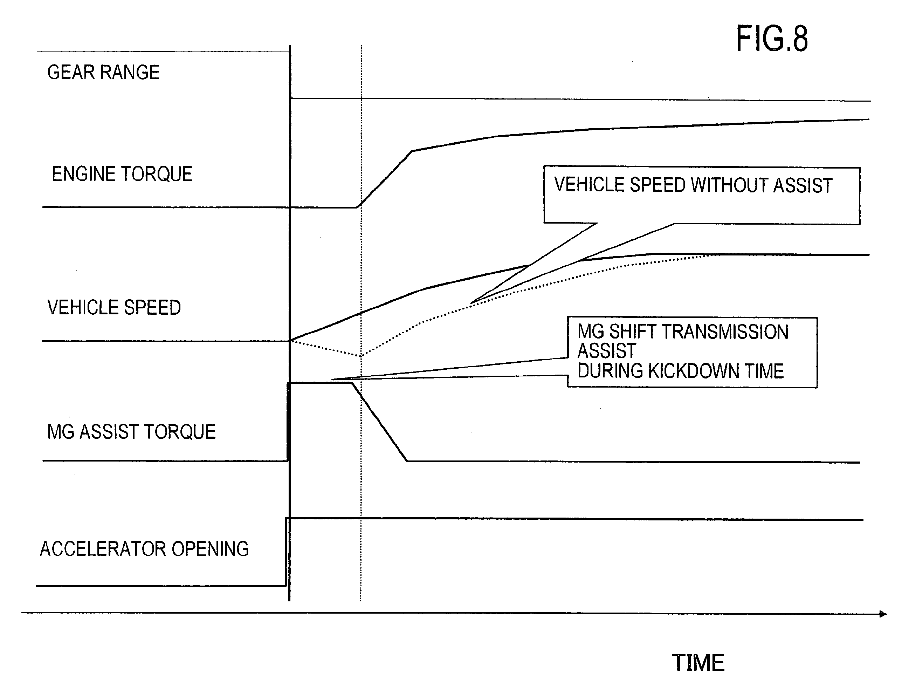

FIG. 8 is a graph showing changes of gear position, engine torque, vehicle speed, MG assist torque, and accelerator opening when a sudden acceleration operation is carried out by a driver in a conventional art. As shown in the drawing, because a torque assist is performed by the MG immediately after an operation of pressing down on the accelerator, acceleration performance with high response has been obtained more than that at a vehicle speed without assist as indicated by the dotted line in the figure. However, because acceleration is performed by the engine after the MG torque assist is completed, corresponding fuel consumption and exhaust gas discharge are unavoidable.

Further, there is a problem that it takes time until an output from the engine is increased after pressing down on the accelerator pedal as described above. In particular, because a time required for a shift transmission operation is added during kickdown as shown in FIG. 8, it takes further time until an output reaches a torque required by a driver.

The present invention is proposed in the light of the above situations and has an object of the present invention of providing a driving source control apparatus for a vehicle capable of lowering an amount of fuel consumption and an amount of exhaust gas while assuring necessary acceleration performance.

According to a first aspect of the present invention, there is provided a driving source control apparatus for vehicle that controls an engine and a motor provided as driving sources, and the apparatus includes means for calculating additional output to be outputted from the motor according to accelerator opening and vehicle speed by assuming that there is no additional torque from the engine when an acceleration request is made by an accelerator operation, and means for setting shortage as an additional torque from the engine when the calculated additional torque from the motor causes a shortage of torque.

Further, according to a second aspect of the present invention, there is provided a driving source control apparatus for vehicle further including means for calculating additional torque corresponding to kickdown shift transmission when the acceleration request fulfills predetermined kickdown requirements.
Further, according to a third aspect of the present invention, there is provided a driving source control apparatus for vehicle in which, the motor is installed so as to be capable of driving drive wheels without transmission, and additional torque corresponding to the kickdown shift transmission is calculated by using a gear ratio of a transmission.
Further, according to a fourth aspect of the present invention, there is provided a driving source control apparatus for vehicle in which, the engine outputs driving force via the transmission, and the apparatus further includes means for restraining shift transmission by the transmission when the acceleration request fulfills predetermined requirements.
Further, according to a fifth aspect of the present invention, there is provided a driving source control apparatus for vehicle further including means for performing shift transmission by a transmission when an acceleration request fulfills predetermined requirements and when a calculated additional torque from the motor causes a shortage of torque.
Further, according to a sixth aspect of the present invention, there is provided a driving source control apparatus for vehicle further comprising means for performing shift transmission by a transmission when an acceleration request fulfills predetermined requirements and when the motor cannot be operated.
Further, according to a seventh aspect of the present invention, there is provided a driving source control apparatus for vehicle in which shift transmission is performed for increasing the driving force of the engine.
Further, according to an eighth aspect of the present invention, there is provided a driving source control apparatus for vehicle further comprising means for calculating driving force obtainable when the shift transmission is performed, and in the apparatus, additional torque by the motor or additional torque by the motor and the engine is calculated based on the driving force obtainable when the shift transmission is performed.
Further, according to a ninth aspect of the present invention, there is provided a driving source control apparatus for vehicle in which the driving force obtainable when the shift transmission is performed is calculated by using a gear ratio of a transmission.
Further, according to a tenth aspect of the present invention, there is provided a driving source control apparatus for vehicle in which predetermined requirements are set based on accelerator opening.

According to the present invention, it is possible to reduce fuel consumption and exhaust gas accompanying acceleration, and to improve response characteristics.

### BRIEF DESCRIPTION OF THE DRAWINGS

FIG. 1 is a block diagram illustrating a structure of a hybrid vehicle to which the present invention can be applied.
FIG. 2 is a skeleton diagram showing a schematic structure (a fourth-speed state) of a driving mechanism of a vehicle according to an exemplary embodiment of the present invention.
FIG. 3 is a flowchart showing processing performed at predetermined time intervals in a driving source control apparatus (HV-ECU) for vehicle according to an exemplary embodiment of the present invention.
FIG. 4 is a graph for explanation of behavior of a vehicle on which a driving source control apparatus (HV-ECU) according to a first exemplary embodiment of the present invention is mounted.
FIG. 5 is a graph for explanation of behavior of the vehicle on which the driving source control apparatus (HV-ECU) according to the first exemplary embodiment of the present invention is mounted.
FIG. 6 is a graph for explanation of concrete operations of the driving source control apparatus (HV-ECU) according to the first exemplary embodiment of the present invention is mounted.
FIG. 7 is a graph showing torque performance of an engine and an MG.
FIG. 8 is a graph for explanation of behavior of a conventional hybrid vehicle.
FIG. 9 is a flowchart showing processing performed at predetermined time intervals in the driving source control apparatus (HV-ECU) for vehicle according to an exemplary embodiment of the present invention.
FIG. 10 is a flowchart showing processing performed at predetermined time intervals in the driving source control apparatus (HV-ECU) for vehicle according to an exemplary embodiment of the present invention.

### PREFERRED MODES FOR CARRYING OUT THE INVENTION

Next, preferred modes for carrying out the present invention will be described in detail with reference to the drawings.

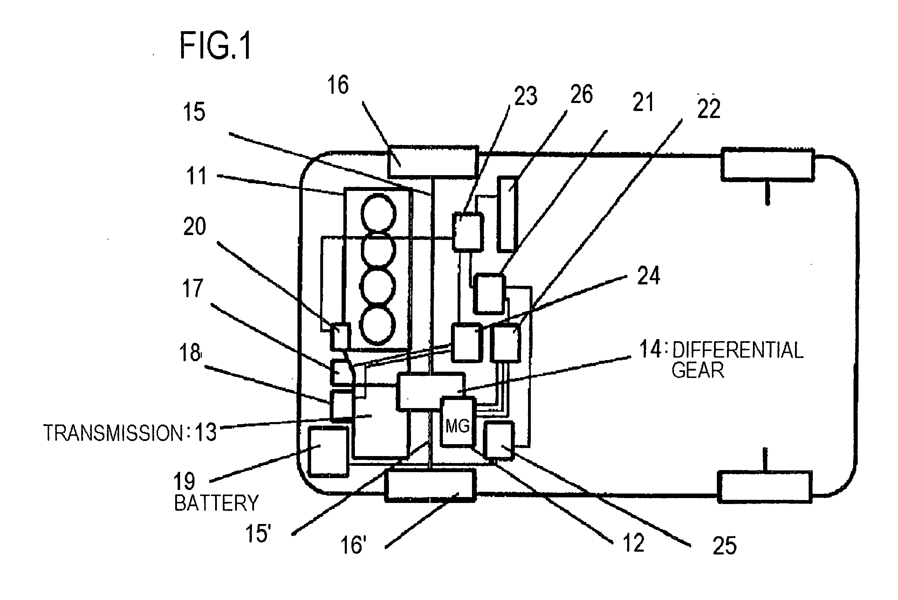

FIG. 1 is a block diagram illustrating a structure of a hybrid vehicle to which the present invention can be applied.
First, referring to FIG. 1, two types of prime movers being an engine (hereinafter called "EG") 11 which is typified by an internal combustion engine, and an MG 12 which is driven by electricity stored in a battery 19 are disposed in parallel in order to drive vehicle wheels.

An output from the engine 11 is transmitted to a transmission 13, and next, the output is transmitted to axle shafts 15 and 15' and drive wheels 16 and 16' via a differential gear (differential) 14 serving as an output part, to drive a vehicle. An output from the MG 12 as well is capable of driving the vehicle via the differential gear (differential) 14 in the same way.

Further, the hybrid vehicle of FIG. 1 is equipped with an HV-ECU 21 (Hybrid Vehicle Electronic Control Unit) that manages the control of the entire vehicle, an MG-ECU that issues a command of driving or regeneration to the MG12 and inverter 22, an EG-ECU 23 that controls stopped and combustion states of the engine 11, an AMT-ECU 24 that controls a clutch actuator 17 and a shift transmission actuator 18 which are built in the transmission 13 to perform optimum shift transmission, and a battery ECU 25 that manages a state of charge of the battery 19.

The HV-ECU 21 operates as a driving source control apparatus for a vehicle, and controls and manages the MG-ECU and inverter 22, the EG-ECU 23, and the battery ECU 25 upon receiving driver's intention to drive. Further, the EG-ECU 23 produces optimal combustion conditions in cooperation with the AMT-ECU 24, and performs fuel control at the time of starting the engine by a starter 20. Further, an indicator 26 that indicates speed of the vehicle is provided to a driving seat.

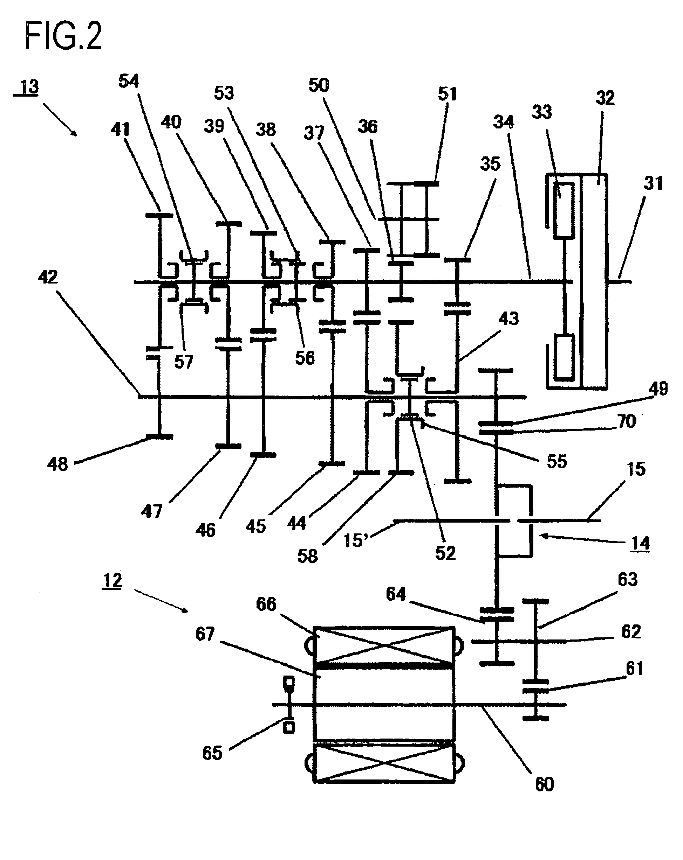

FIG. 2 is a skeleton diagram showing a schematic structure (a fourth-speed state) of a driving mechanism of the hybrid vehicle. First, to describe the structure on the transmission 13 side, a flywheel 32 is fixed to an end of an output shaft 31 of the engine 11, and a clutch element 33 is attached to the flywheel 32, which is engageable and disengageable by the clutch actuator 17. Driven members of the clutch are integrally secured to an input shaft 34 of the transmission 13 with respect to a rotation direction by splines and the like. Drive gears of 1st 35, Rev 36, and 2nd 37 are integrally structured in the order from the clutch side with the input shaft 34, and drive gears of 3rd 38, 4th 39, 5th 40, and 6th 41 are further rotatably mounted. Further, an output shaft 42 of the transmission 13 is provided so as to be parallel to the input shaft 34, and driven gears of 1st 43 and 2nd 44 are mounted rotatably, and respective driven gears of 3rd 45, 4th 46, 5th 47, and 6th 48 are mounted integrally on the output shaft 42 at positions so as to engage with the respective gears. Then, a drive gear 49 engaging with a ring gear (final gear) 70 provided to the case of the differential gear (differential) 14 is integrally mounted to the end on the clutch side of the output shaft 42 of the transmission 13. Moreover, a shaft 50 parallel to the input shaft 34 of the transmission 13 is provided on the transmission 13 side, and a Rev idler gear 51 is mounted rotatably. The Rev idler gear 51 is capable of moving in an axial direction as well, does not engage with the Rev drive gear 36 at a position on the clutch side (the thick solid line) and is capable of engaging with the Rev drive gear 36 at a position on the 6th drive gear 41 side (the thin line).

Hub members 52, 53, and 54 that rotate in unison together with the respective shafts are provided between the respective drive gears and driven gears of the input shaft 34 and the output shaft 42 of the transmission 13. The respective hub members have engagement means such as splines and the like on their outer circumferences, and the engagement means engage with sleeve members 55, 56, and 57 further provided to the outer circumferences, and the sleeves are moved in the axial direction (to the right and left in the drawing) by the shift transmission actuator 18 to come to engage with the splines formed on the gears on the left side and the gears on the right side to be capable of transmitting power, and come to a neutral position in which the sleeves do not engage with any gear. In FIG. 2, the sleeve member 56 has moved to the left to be in a fourth-speed state. Further, a gear 58 is provided to a portion further extending from the outer circumference part of the sleeve member 55 located between the 1st 43 and the 2nd 44 of the output shaft 42. The gear 58 engages with the idler gear 51 in a state in which the idler gear 51 engages with the Rev drive gear 36, to form a neutral state and a Rev driving state.

As described above, the driving force of the engine 11 is transmitted to a first drive gear 49 at the end of the output shaft 42 according to a transmission gear ratio selected by the shift transmission actuator 18, after the clutch is engaged by the clutch actuator 17.

On the other hand, the driving force outputted from the MG 12 is transmitted to a motive driving gear 61 integrally provided to the end of an MG output shaft 60. A driven gear 63 engaging with the motive driving gear 61 and a second drive gear 64 engaging with the ring gear (final gear) 70 provided to the case of the differential gear (differential) 14 are provided on an intermediate speed reduction shaft 62 installed in parallel with the MG output shaft 60, and the driving force from the MG 12 is transmitted to the second drive gear at a predetermined speed reduction ratio.

According to the above-described structure, due to the HV-ECU 21 (Hybrid Vehicle Electronic Control Unit), the outputs from the engine 11 and the MG 12 are transmitted to the ring gear (final gear) 70, the axle shafts 15 and 15' and the drive wheels 16 and 16' are driven, wherein a difference between the numbers of rotations is absorbed via the differential gear (differential) 14 as needed.

Further, the MG 12 performs both the function of accelerating by receiving electric power and converting it into driving force and the function of regenerating by converting driving force into electric power. By applying a great amount of electric current at an optimum position (timing) at which magnetic force generated by a stator member 66 with three-phase electric power passes through an iron portion of a rotor part to return, the MG 12 is controlled so as to be capable of performing efficient conversion including generation of driving force and control of rotation direction.

A resolver 65 is attached as a rotation detecting apparatus to the side opposite to the output shaft 60 side of the MG 12. The resolver 65 detects a relative angle between the stator member 66 around which a coil of the MG 12 is wound and a rotor member 67 rotating integrally with the output shaft 60 of the MG. The relative angle can be utilized as a resolver signal. For example, a resolver signal is converted with a value depending on a pole number of the MG 12 and a gear ratio on the MG 12 side in order to be used as a vehicle speed.

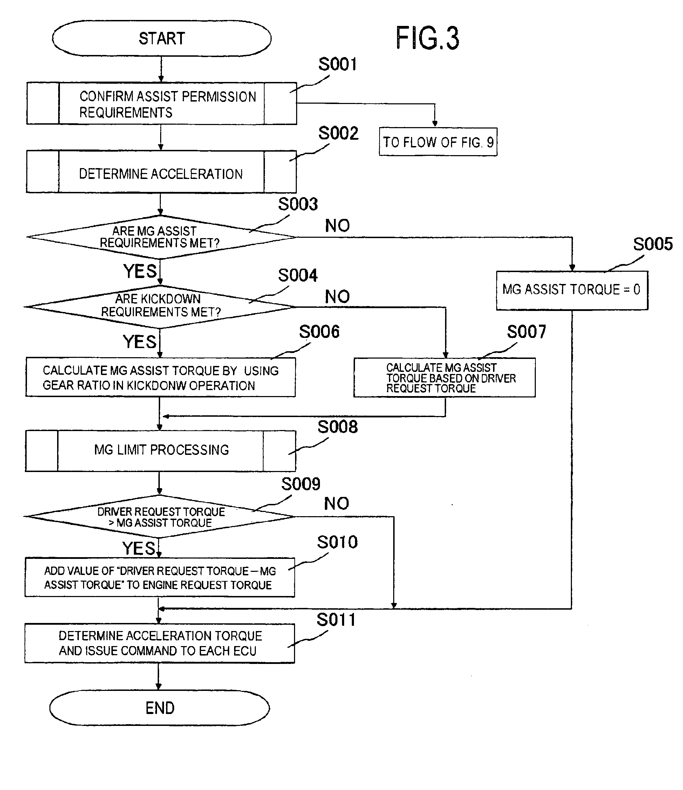

Next, the control of a driving source in the hybrid vehicle formed to have the above-described structure will be described in detail with reference to the drawings. FIG. 3 is a flowchart showing processing performed at predetermined time intervals in the HV-ECU 21.

Referring to FIG. 3, the HV-ECU 21 first confirms whether or not predetermined assist permission requirements are fulfilled. The requirements are that the state-of-charge value SOC (State Of Charge) of the battery 19 is greater than or equal to a predetermined value, the MG 12 is less than or equal to a predetermined temperature, and a vehicle speed is greater than or equal to a predetermined value (step S001).

Next, the HV-ECU 21 confirms whether or not an acceleration request is made from a driver (step S002).
For example, in a case where an accelerator opening sensor is provided to the vehicle, the processing is as follows, for example. When an accelerator pedal is pressed down on from the previous point in time to increase an accelerator opening θ, an acceleration determination flag is placed, and the acceleration determination flag is cleared at a point in time when the accelerator pedal is released.

Next, the HV-ECU 21 determines whether or not the MG assist requirements are met based on the results at the above-described steps S001 and S002 (step S003). Here, for example, in a case where the state-of-charge value SOC of the battery 19 is less than or equal to the predetermined value, and when an acceleration request is not made from the driver or the vehicle is not driving, it is determined that an MG assist is unnecessary, and an MG assist torque is set to 0 (step S005).

On the other hand, in a case where the MG assist requirements are met, the HV-ECU 21 confirms whether or not kickdown requirements are fulfilled (step S004). The term "kickdown" means that control of automatically downshifting to a lower gear is performed for acceleration in driving in shift transmission of the transmission 13. For example, in a case where an accelerator opening θ or a change Δθ in the accelerator opening exceeds a predetermined threshold value θ_{TH}, it is determined that a kickdown request is made. Note that the threshold value θ_{TH} may be a fixed value, or may be dynamically varied according to a driving state of the vehicle.

In a case where the kickdown requirements are not met, the HV-ECU 21 finds an increase amount of a driver request torque according to a vehicle speed and the accelerator opening θ, and directly sets a value into which the increase amount is divided by a gear ratio of the MG gears 61 and 64, as an MG assist torque (step S007).

On the other hand, in a case where the kickdown requirements are met, the HV-ECU 21 sets a value into which a driver request torque to which the torque increased by kickdown is added (to plainly show one example, the driver request torque found according to a vehicle speed and the accelerator opening θ is multiplied by a gear ratio of a requested gear position) is divided by a gear ratio of the MG gears 61 and 64, as an MG assist torque (step S006). Note that, at this time, the HV-ECU 21 does not perform shift transmission (downshift) in practice.

Next, the HV-ECU 21 performs processing of restricting the MG assist torque calculated at the above-described step S006 or S007 based on the items such as an SOC value, an MG temperature, an MG maximum output, and the like (step S008).

Next, the HV-ECU 21 confirms whether or not it is possible to fulfill the driver request torque with the MG assist torque calculated and restricted in this way (step S009). In a case where the torque requested by the driver can be covered with the MG assist torque, the HV-ECU 21 specifies the MG assist torque as an instructed torque, and issues a command to the MG-ECU (step S011).

On the other hand, in a case where the torque requested by the driver cannot be covered with the MG assist torque, the HV-ECU 21 adds a difference between the increase amount of the driver request torque and the MG assist torque to an engine request torque (step S010), after which the HV-ECU 21 specifies the MG assist torque and the engine request torque as instructed torques, and issues orders to the MG-ECU and the EG-ECU (step S011).

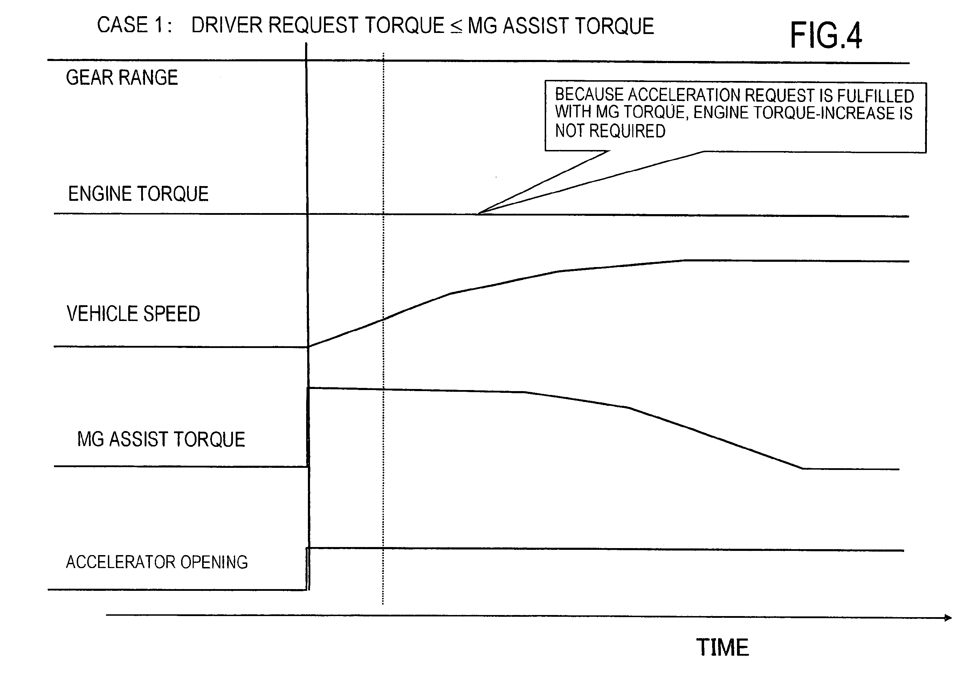

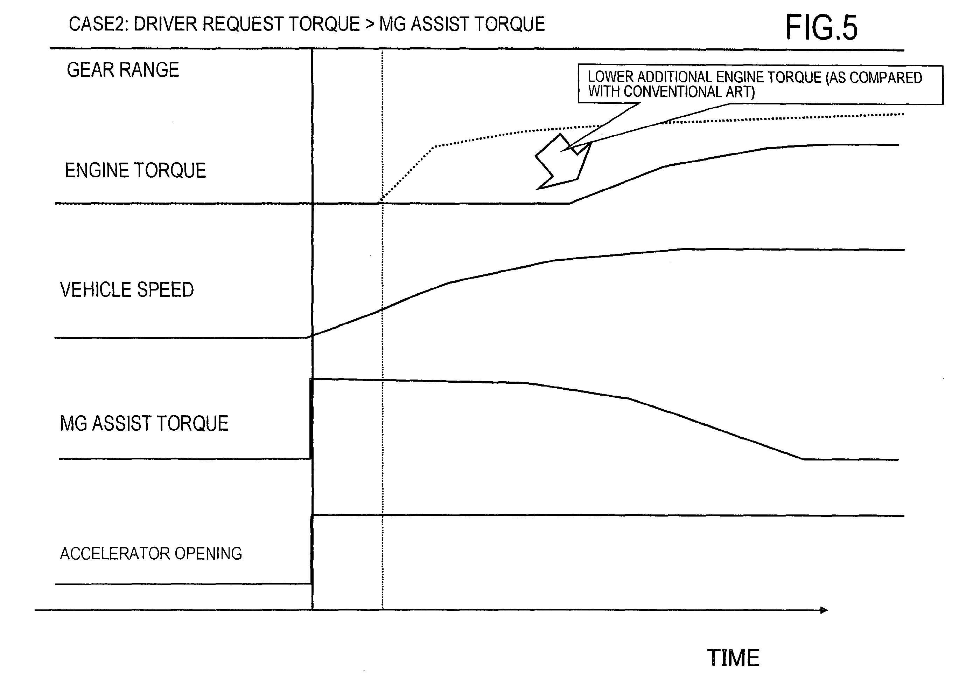

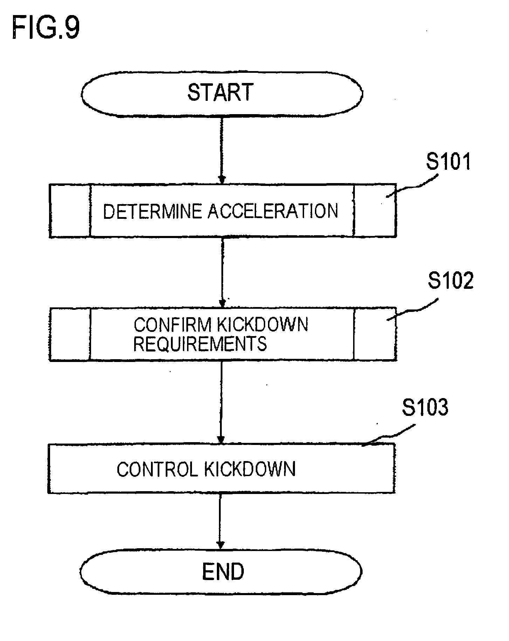

Accordingly, in a case where the acceleration request can be fulfilled with a torque from the MG 12, as shown in FIG. 4, additional torque from the EG 11 is 0. Further, even in a case where the acceleration request cannot be fulfilled with the torque from the MG 12, as shown in FIG. 5, additional torque from the EG 11 can be lowered. By lowering the additional torque from the EG 11, reduction of exhaust gas and improvement in fuel consumption are achieved.
Further, at step S001 in FIG. 3, in a case where it is determined that it is impossible to operate the MG 12 by the reasons that the state-of-charge value SOC of the battery 19 is less than or equal to the predetermined (threshold) value, the MG 12 is greater than or equal to the predetermined temperature, and the like, the routine proceeds to a flowchart of FIG. 9, and an acceleration request is made by the driver at step S101, and in a case where the kickdown requirements are met at step S102, the control of automatically downshifting to a low gear in shift transmission of the transmission 13 is performed at step S103.
Accordingly, even in a case where it is impossible to output additional torque from the MG 12, it is possible to increase driving force by performing kickdown control, which responds to an acceleration request from the driver.

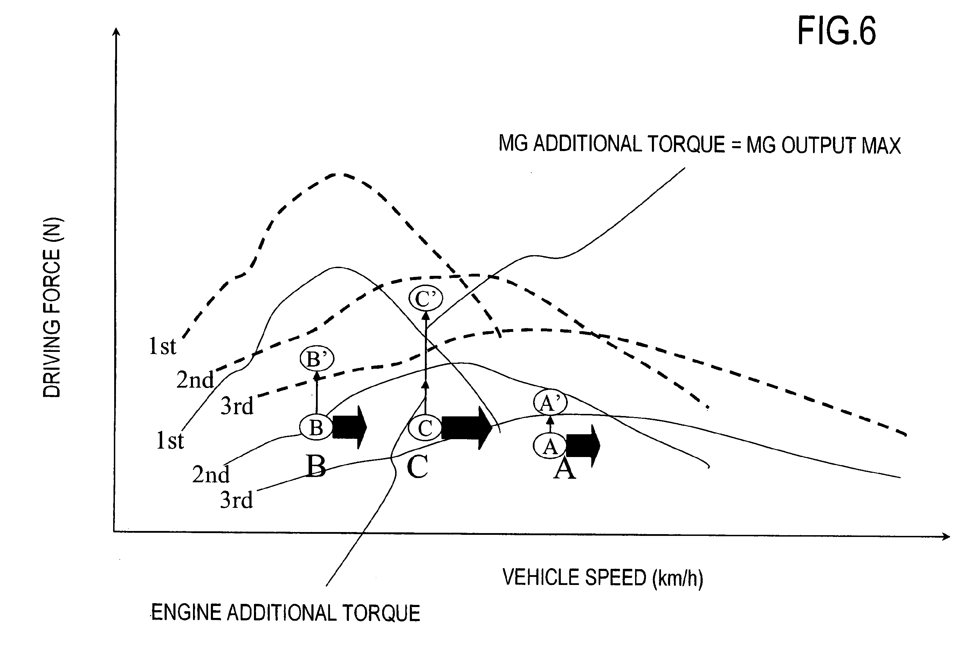

Finally a difference of the present invention from a conventional art in which kickdown has been performed according to levels of a vehicle speed and an acceleration request will be described. The solid lines in FIG. 6 indicate driving performance curves (only the EG torques) of the respective gearshift ranges (positions) from 1st to 3rd, and the broken lines in FIG. 6 indicate driving performance curves (EG torque + MG torque) in a case where a torque assist by the MG is provided.

For example, in the case (case A) where an acceleration request (to point A') is made from the vehicle state at point A (the gearshift range is 2nd), because the point A' is below the second-speed (2nd) performance curve (only the EG torque), this case can be handled by increasing an engine request torque even in the conventional driving source control apparatus (kickdown is unnecessary). On the other hand, in the driving source control apparatus according to the present invention, this case is handled by an output from only the MG 12. Accordingly, in this case, the present invention has the advantage that the response characteristics of the MG make it possible to prevent fuel consumption and exhaust gas from increasing.

Further, in the case (case B) where an acceleration request (to point B') is made from the vehicle state at point B (the gearshift range is 2nd) in FIG. 6, because the point B' is above the second-speed (2nd) performance curve (only the EG torque), kickdown to the 1st is performed in the conventional driving source control apparatus. On the other hand, kickdown is not performed in the driving source control apparatus according to the present invention, and because the driver request can be covered with an assist by the MG 12, an engine additional torque from the engine is also unnecessary. Accordingly, in this case, the present invention has an advantage in the point that it is possible to make kickdown unnecessary (including the prevention of a time loss, fuel consumption, and exhaust gas associated with the kickdown) in addition to the advantages described above in the case A.

Further, in the case (case C) where an acceleration request (to point C') from the vehicle state at point C (gearshift range (or position) is 2nd) in FIG. 6, because the point C' is above the second-speed (2nd) performance curve (only the EG torque), kickdown to the 1st is performed in the conventional driving source control apparatus. However, even if kickdown to the 1st is performed, because the point C' is above the first-speed (1st) performance curve (only the EG torque), the driving force falls short. On the other hand, kickdown is not performed in the driving source control apparatus according to the present invention. However, because the size of the torque increase request is large, it cannot be covered with only the additional torque by the MG 12 and an engine additional torque is necessary. Accordingly, in this case, the present invention has an advantage in the point that it is possible to make kickdown unnecessary (including the prevention of a response delay, fuel consumption, and exhaust gas associated with the kickdown) and a point that an additional engine torque can be lowered (refer to FIG. 5) .

As described above, because the apparatus responds to an acceleration request from the driver by the MG first in a range of an MG temperature and a battery remaining amount in which the MG is capable of functioning normally, not only is it possible to avoid an increase in engine torque, an increase in fuel injection, and an increase in exhaust gas, but also it is possible to improve the response to a driver request (make kickdown unnecessary), eliminate a driving force interruption (torque loss) by shift transmission, and the like.

One exemplary embodiment of the present invention has been described above. However, the technical scope of the present invention is not limited to the descriptions of the above-described exemplary embodiment, and various modifications can be added in accordance with a specification etc. of a vehicle to be applied.

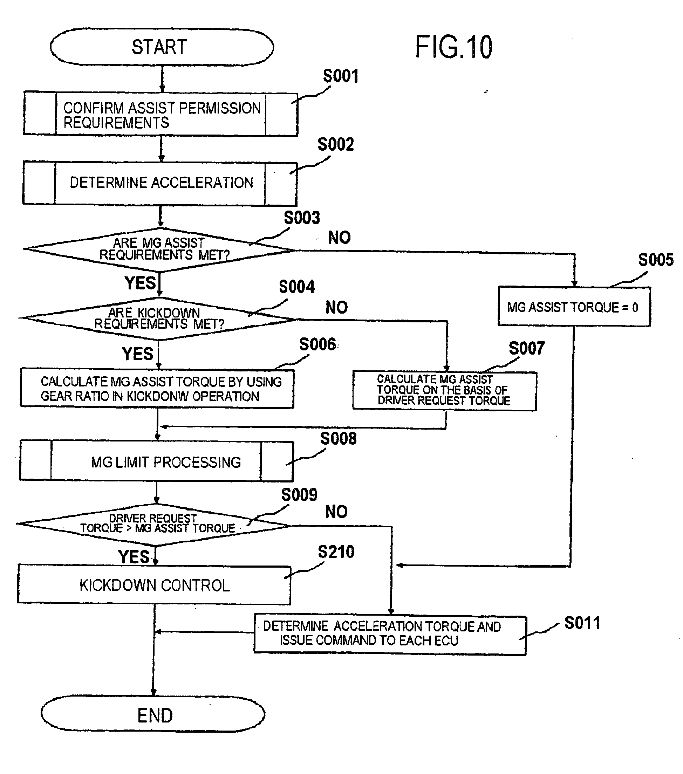

For example, in the above-described exemplary embodiment, an example of the hybrid vehicle having the structure in which the driving force outputted from the MG is transmitted to the differential gear (differential) 14 has been described. However, the above-described exemplary embodiment can be applied to other vehicles in which an engine and a motor are in a parallel relationship to drive the vehicle.
Further, as another exemplary embodiment, the control of the HV-ECU 21 may be performed as in a flowchart of FIG. 10 for example. Because step S001 to step S009 in the flowchart of FIG. 10 are the same as step S001 to step S009 in the flowchart of FIG. 3, descriptions thereof will be omitted. At step S009, in a case where a torque requested by a driver cannot be covered with an MG assist, the HV-ECU 21 performs the control of automatically downshifting to a low gear in shift transmission of the transmission 13 at step S210.
Accordingly, even in a case where additional torque from the MG 12 causes a shortage of torque, it is possible to increase the driving force by performing kickdown control, which responds to the acceleration request from the driver.
Additionally, within the scope of the entire disclosure of the present invention (including the claims), further modifications and adjustments are possible based on the basic technical idea. Further, within the scope of the claims of the present invention, a broad range of combinations and selections of various disclosed factors (or components) are possible.
Further, further problems, objects, and developing modes of the present invention will become apparent from all the disclosures including the claims of the present invention.

## Claims

1. A driving source control apparatus for vehicle that controls an engine and a motor provided as driving sources, the apparatus comprising:
means for calculating additional torque to be outputted from the motor according to accelerator opening and vehicle speed by assuming that there is no additional torque from the engine when an acceleration request is made by an accelerator operation; and
means for setting shortage as an additional torque from the engine when the calculated additional torque from the motor causes a shortage of torque.

2. The driving source control apparatus for vehicle according to claim 1, further comprising means for restraining shift transmission and for calculating additional torque corresponding to kickdown shift transmission when the acceleration request fulfills predetermined kickdown requirements.

3. The driving source control apparatus for vehicle according to claim 2, wherein
the motor is installed so as to be capable of driving drive wheels without transmission, and
additional torque corresponding to the kickdown shift transmission is calculated by using a gear ratio of the transmission.

4. The driving source control apparatus for vehicle according to claim 1, wherein
the engine outputs driving force via a transmission, and
the apparatus further comprising means for restraining shift transmission via the transmission when the acceleration request fulfills predetermined requirements.

5. The driving source control apparatus for vehicle according to claim 4, further comprising
means for performing acceleration by the transmission when the acceleration request fulfills predetermined requirements and when the calculated additional torque from the motor causes a shortage of torque.

6. The driving source control apparatus for vehicle according to claim 4, further comprising
means for performing shift transmission by the transmission when the acceleration request fulfills predetermined requirements and when the motor cannot be operated.

7. The driving source control apparatus for vehicle according to any one of claims 4 to 6, wherein
the shift transmission is for increasing the driving force of the engine.

8. The driving source control apparatus for vehicle according to claim 4, further comprising
means for calculating driving force obtainable when the shift transmission is performed, wherein
additional torque by the motor or additional torque by the motor and the engine is calculated based on the driving force obtainable when the shift transmission is performed.

9. The driving source control apparatus for vehicle according to claim 8, wherein
the driving force obtainable when the shift transmission is performed is calculated by using the gear ratio of the transmission.

10. The driving source control apparatus for vehicle according to any one of claims 4 to 9, wherein
the predetermined requirements are set based on the accelerator opening.

## Amended claims

### Amended claims under Art. 19.1 PCT

1. (Amended) A driving source control apparatus for vehicle that controls an engine and a motor provided as driving sources, the apparatus comprising:
means for calculating additional torque to be outputted from the motor according to accelerator opening and vehicle speed by assuming that there is no additional torque from the engine when an acceleration request is made by an accelerator operation;
means for calculating additional possible torque which can be added by the motor based on a temperature condition of the motor when the acceleration request is made; and
means for setting shortage as an additional torque from the engine when a shortage of torque is caused by comparing the additional torque of the motor calculated by said means for calculating [additional] torque and the additional possible torque of the motor calculated by said means for calculating additional possible torque.

2. The driving source control apparatus for vehicle according to claim 1, further comprising means for restraining shift transmission and for calculating additional torque corresponding to kickdown shift transmission when the acceleration request fulfills predetermined kickdown requirements.

3. The driving source control apparatus for vehicle according to claim 2, wherein
the motor is installed so as to be capable of driving drive wheels without transmission, and
additional torque corresponding to the kickdown shift transmission is calculated by using a gear ratio of the transmission.

4. The driving source control apparatus for vehicle according to claim 1, wherein
the engine outputs driving force via a transmission, and
the apparatus further comprising means for restraining shift transmission via the transmission when the acceleration request fulfills predetermined requirements.

5. The driving source control apparatus for vehicle according to claim 4, further comprising
means for performing acceleration by the transmission when the acceleration request fulfills predetermined requirements and when the calculated additional torque from the motor causes a shortage of torque.

6. The driving source control apparatus for vehicle according to claim 4, further comprising
means for performing shift transmission by the transmission when the acceleration request fulfills predetermined requirements and when the motor cannot be operated.

7. The driving source control apparatus for vehicle according to any one of claims 4 to 6, wherein
the shift transmission is for increasing the driving force of the engine.

8. The driving source control apparatus for vehicle according to claim 4, further comprising
means for calculating driving force obtainable when the shift transmission is performed, wherein
additional torque by the motor or additional torque by the motor and the engine is calculated based on the driving force obtainable when the shift transmission is performed.

9. The driving source control apparatus for vehicle according to claim 8, wherein
the driving force obtainable when the shift transmission is performed is calculated by using the gear ratio of the transmission.

10. (Amended) The driving source control apparatus for vehicle according to claim 4, wherein
the predetermined requirements are set based on the accelerator opening.

11. (Added) A driving source control apparatus for vehicle that controls an engine and a motor provided as driving sources, the apparatus comprising:
means for calculating additional torque to be outputted from the motor according to accelerator opening and vehicle speed by assuming that there is no additional torque from the engine when an acceleration request is made by an accelerator operation;
means for setting shortage as an additional torque from the engine when the calculated additional torque from the motor causes a shortage of torque; and
means for restraining shift transmission and for calculating additional torque corresponding to kickdown shift transmission and restraining shift transmission when the acceleration request fulfills predetermined kickdown requirements.

12. (Added) The driving source control apparatus for vehicle according to claim 11, wherein
the motor is installed so as to be capable of driving drive wheels without transmission, and
additional torque corresponding to the kickdown shift transmission is calculated by using a gear ratio of the transmission.

13. (Added) A driving source control apparatus for vehicle that controls an engine and a motor provided as driving sources, the apparatus comprising:
means for calculating additional torque to be outputted from the motor according to accelerator opening and vehicle speed by assuming that there is no additional torque from the engine when an acceleration request is made by an accelerator operation; and
means for setting shortage as an additional torque from the engine when the calculated additional torque from the motor causes shortage of torque;
wherein the engine outputs driving force via a transmission, and
the apparatus further comprises means for restraining shift transmission by the transmission when the acceleration request fulfills predetermined requirements.

14. (Added) The driving source control apparatus for vehicle according to claim 13, further comprising means for performing shift transmission by the transmission when the acceleration request fulfills predetermined requirements and when the calculated additional torque from the motor causes a shortage of torque.

15. (Added) The driving source control apparatus for vehicle according to claim 13, further comprising-means for performing shift transmission by the transmission when the acceleration request fulfills predetermined requirements and when the motor cannot be operated.

16. (Added) The driving source control apparatus for vehicle according to claim 13, wherein
the shift transmission is for increasing the driving force of the engine.

17. (Added) The driving source control apparatus for vehicle according to claim 13, further comprising means for calculating driving force obtainable when the shift transmission is performed, wherein
additional torque by the motor or additional torque by the motor and the engine is calculated based on the driving force obtainable when the shift transmission is performed.

18. (Added) The driving source control apparatus for vehicle according to claim 13, wherein
the predetermined requirements are set based on the accelerator opening.

Statement under Art. 19.1 PCT
Referring to claim 1, it has been amended based on the disclosure at paragraphs [0033]-[0035] and [0041] so as to distinguish from the cited documents and to make the inventive step clear, to read as set forth below:
"means for calculating additional possible torque which can be added by the motor based on a temperature condition of the motor when the acceleration request is made; and
means for setting shortage as an additional torque from the engine when a shortage of torque is caused by comparing the additional torque of the motor calculated by said means for calculating [additional] torque and the additional possible torque of the motor calculated by said means for calculating additional possible torque."

Claims 11 and 13 have been made independent form respectively, from the inventions of previous claims 2 and 4.

Claims 12 and 14-18 correspond to previous claims 3-8, and 10, respectively.

Accordingly, the amendment is based on the disclosure of the description submitted upon filing the application, and contains no new matter.
